# EUROPEAN PATENT SPECIFICATION

(11) **EP 3 216 949 B1**
(45) Date of publication and mention of the grant of the patent: **07.08.2019**
(21) Application number: 15857688.4
(22) Date of filing: 21.10.2015
(51) Int. Cl.: E05B 17/00, B62H 5/06, E05B 17/18, E05B 47/00, E05B 77/44, E05B 83/00, E05B 85/02, E05B 17/20, E05B 27/00, E05B 17/14

(54) **PROTECTIVE DEVICE FOR CYLINDER LOCK**
SCHUTZVORRICHTUNG FÜR SCHLIESSZYLINDER
DISPOSITIF DE PROTECTION POUR SERRURE À CYLINDRE

(30) Priority: 07.11.2014 JP 2014226744
(43) Date of publication of application: 13.09.2017
(73) Proprietor: Kabushiki Kaisha Honda Lock, Miyazaki-shi, Miyazaki 880-0293 (JP)
(72) Inventor: TANAKA, Akimitsu, Miyazaki-shi, Miyazaki 880-0293 (JP); PRACHYA, Moonthong, Muang, Chonburi 20000 (TH)
(74) Representative: Weickmann & Weickmann PartmbB
(86) International application number: PCT/JP2015/079729
(87) International publication number: WO 2016/072268

(56) References cited:
- EP-A1- 2 995 752
- JP-A- 2007 062 561
- JP-A- 2008 291 587
- JP-A- 2009 221 728
- JP-A- 2011 111 822

## Description

### TECHNICAL FIELD

The present invention relates to a protective device for a cylinder lock in which a shutter plate is supported on a casing having a mechanical key insertion hole for a mechanical key to be inserted into a cylinder lock, the shutter plate being covered by a case forming part of the casing and being capable of moving between a closed position in which the shutter plate closes the mechanical key insertion hole and an open position in which the mechanical key insertion hole is opened.

### BACKGROUND ART

A protective device for a cylinder lock that includes a shutter plate that opens and closes a key hole of the cylinder lock is known from Patent Document 1.

### RELATED ART DOCUMENTS

### PATENT DOCUMENTS

Patent Document 1 JP 3914043 B2

### SUMMARY OF THE INVENTION

### PROBLEMS TO BE SOLVED BY THE INVENTION

In the arrangement disclosed in Patent Document 1 above, a case forming part of a casing and covering the shutter plate is formed from a metal such as zinc in order to ensure theft resistance, thus causing the casing to increase in weight and thereby resulting in an increase in weight of a vehicle, etc. on which the cylinder lock is disposed.

The present invention has been accomplished in light of such circumstances, and it is an object thereof to provide a protective device for a cylinder lock that can lighten the weight of a case forming part of a casing while ensuring the theft resistance. Document EP 2995752 A1, which was published after the filing date of the present invention, discloses a protective device for a cylinder lock comprising a shutter plate adapted to close a mechanical key insertion hole, a case adapted to cover the shutter plate, and a metal protector adapted to cover the shutter plate.

### MEANS FOR SOLVING THE PROBLEMS

In order to attain the above object, according to a first aspect of the present invention, there is provided a protective device for a cylinder lock according to claim 1.

Further, according to a second aspect of the present invention, in addition to the first aspect, the protector is fixed to the body.

Furthermore, according to a third aspect of the present invention, in addition to the first or second aspect, the case is formed so as to comprise a plurality of side wall portions disposed so as to face mutually different directions, at least two side wall portions being resiliently engaged with the body, and other than these side wall portions one side wall portion being fastened to the body.

### EFFECTS OF THE INVENTION

In accordance with the first aspect of the present invention, due to the case main part being made of a resin, the weight of the case can be lightened, and due to the protector, made of a metal, forming the case together with the case main part being inserted and joined to the case main part it is possible to ensure the theft resistance.

Furthermore, in accordance with the second aspect of the present invention, since the protector is fixed to the body, fixing of the case to the body can be made strong.

Moreover, in accordance with the third aspect of the present invention, the case has a plurality of side wall portions disposed so as to face mutually different directions, and since among the side wall portions, at least two side wall portions are resiliently engaged with the body, and another one of the side wall portions is fastened to the body, it is possible to make assembly of the case to the body easy, thus enhancing the ease of assembly.

### BRIEF DESCRIPTION OF DRAWINGS

FIG. 1 is a side view of a two-wheeled motor vehicle, (first embodiment)
FIG. 2 is a perspective view of a cylinder lock, a cylinder lock protective device, a protective device opening operation restriction device, and a key unit. (first embodiment)
FIG. 3 is a perspective view of a magnet key. (first embodiment)
FIG. 4 is an exploded perspective view of the cylinder lock protective device and the protective device opening operation restriction device, (first embodiment)
FIG. 5 is a front view of the cylinder lock protective device and the protective device opening operation restriction device showing a state in which a shutter plate is at an open position and a case is omitted, (first embodiment)
FIG. 6 is a front view in a state in which the shutter plate is removed from FIG. 5. (first embodiment)
FIG. 7 is a front view in a state in which an inner cover plate is removed from FIG. 6. (first embodiment)
FIG. 8 is a perspective view of the case. (first embodiment)
FIG. 9 is a perspective view of a protector. (first embodiment)
FIG. 10 is a perspective view of a casing, (first embodiment)
FIG. 11 is a perspective view of the shutter plate when viewed from the side opposite to the case. (first embodiment)
FIG. 12 is a front view of the cylinder lock protective device and the protective device opening operation restriction device showing a state in which the shutter plate is at a closed position and the case is omitted, (first embodiment)
FIG. 13 is a perspective view of the cylinder lock protective device and the protective device opening operation restriction device showing a state in which the shutter plate is at the closed position and the casing is omitted, (first embodiment)
FIG. 14 is a view in the direction of arrow 14 in Fig. 13. (first embodiment)
FIG. 15 is a perspective view showing an arrangement in which a magnet lock, a restriction release member, and a second restricting member are linked. (first embodiment)
FIG. 16 is a side view when a body of the casing is viewed from the direction of arrow 16 in FIG. 5. (first embodiment)
FIG. 17 is a front view of a magnet key follower member. (first embodiment)
FIG. 18 is a view in the direction of arrow 18 in Fig. 17. (first embodiment)
FIG. 19 is a sectional view along line 19-19 in FIG. 2. (first embodiment)
FIG. 20 is an exploded perspective view of a follower and a slide member. (first embodiment)
FIG. 21 is a front view, corresponding to FIG. 12, in a state in which a mechanical key is inserted at a LOCK position, (first embodiment)
FIG. 22 is a front view, corresponding to FIG. 12, in a state in which the mechanical key is pivoted to an OFF position, (first embodiment)
FIG. 23 is a view, corresponding to FIG. 14, in a state in which the casing is omitted. (first embodiment)
FIG. 24 is a front view, corresponding to FIG. 12, in a state in which the mechanical key is pivoted to an ON position, (first embodiment)
FIG. 25 is a front view, corresponding to FIG. 12, in a state in which the mechanical key is pulled out at the LOCK position, (first embodiment)

### EXPLANATION OF REFERENCE NUMERALS AND SYMBOLS

- 15: Cylinder lock
- 16: Cylinder body
- 17: Cylinder lock protective device
- 24: Mechanical key
- 29: Case main part
- 30: Protector
- 30a: Flat plate portion
- 35: Casing
- 36: Shutter plate
- 37: Mechanical key insertion hole
- 38: Body
- 39: Case
- 39a, 39b, 39c, 39d: Side wall portion

### MODES FOR CARRYING OUT THE INVENTION

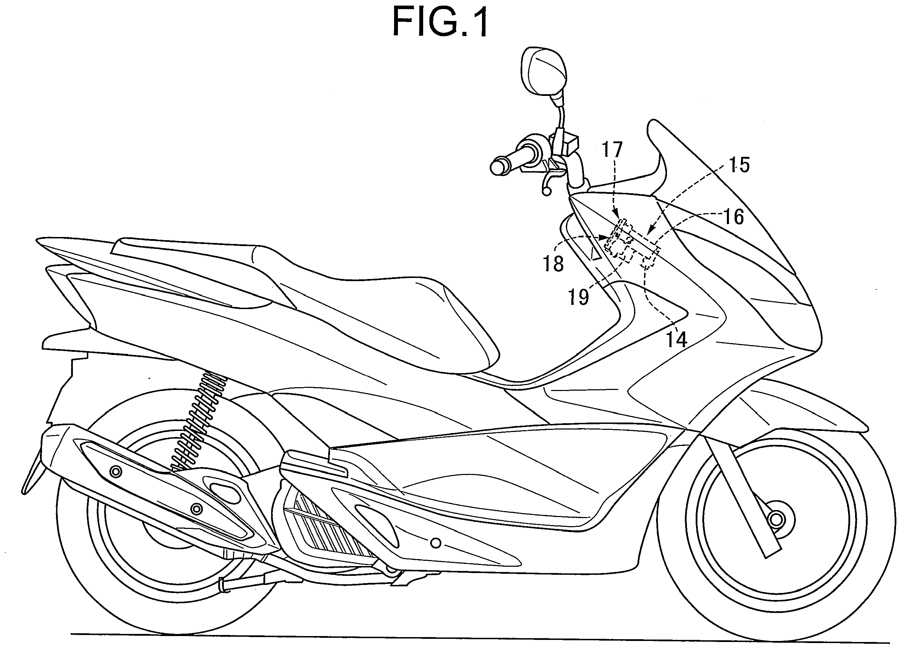

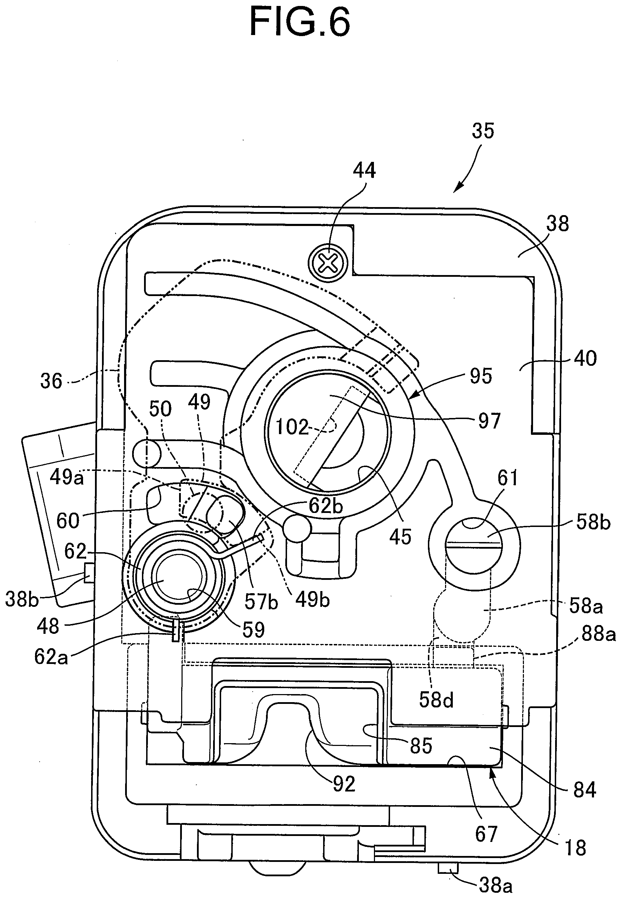

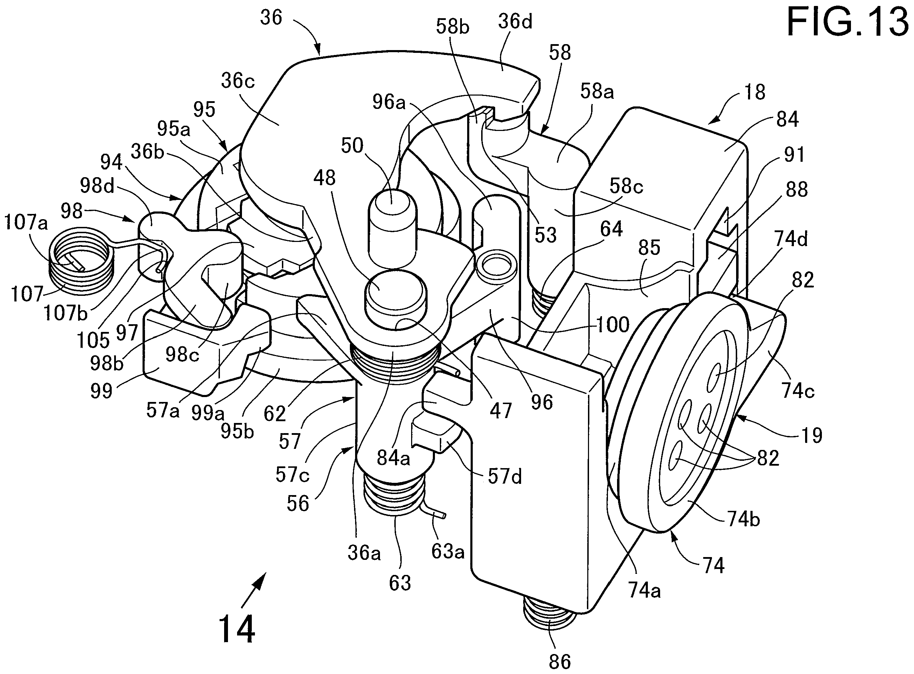

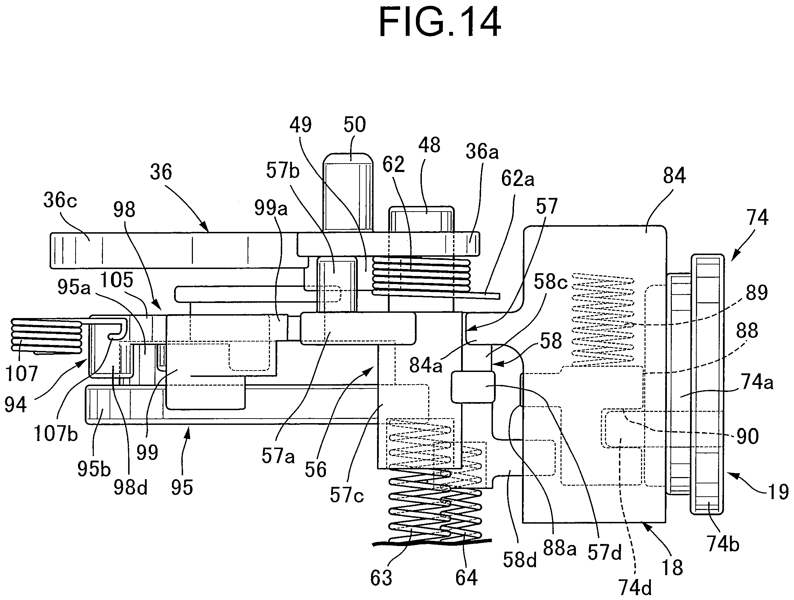

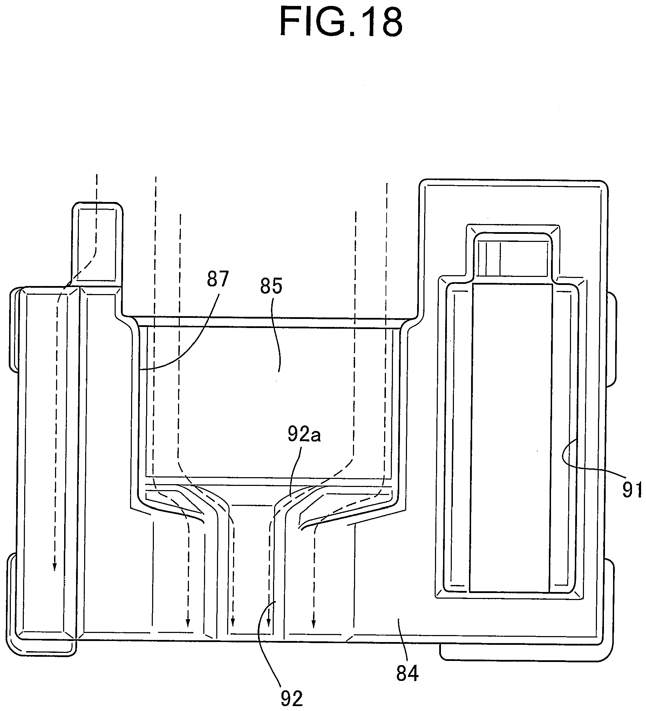

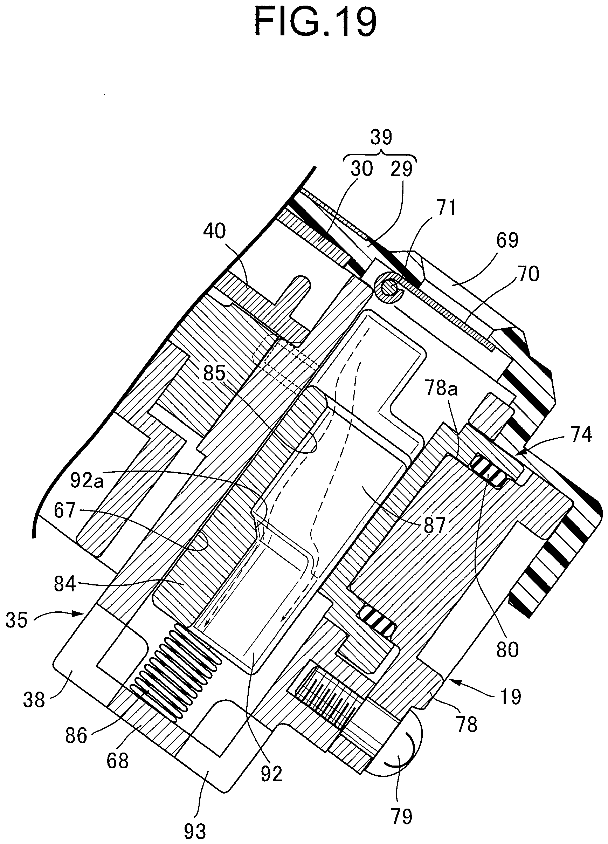

An embodiment of the present invention is explained below by reference to the attached FIG. 1 to FIG. 25.

### FIRST EMBODIMENT

First, in FIG. 1, a cylinder lock 15 that can carry out switching of the switching mode of an ignition switch 14 and switching of steering between a locked state and an unlocked state is disposed in a front part of for example a scooter type two-wheeled motor vehicle. A cylinder body 16 of the cylinder lock 15 is disposed so as to be inclined downward to the front, a cylinder lock protective device 17 is mounted on an upper part of the cylinder body 16, and a protective device opening operation restriction device 18 is connectedly provided so as to be adjacent to the cylinder lock protective device 17 from below, the protective device opening operation restriction device 18 having a magnet lock 19 that, when locked, maintains a closed state of the cylinder lock protective device 17.

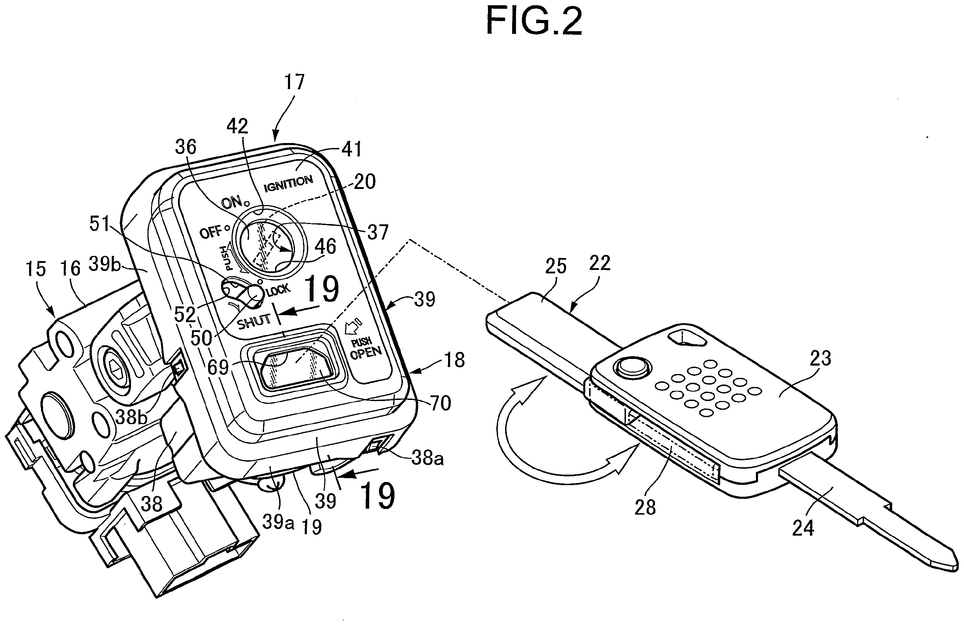

In FIG. 2, the cylinder lock protective device 17 enables a key hole 20 of the cylinder lock 15 to be closed and protected by a shutter plate 36, and the closed state of the cylinder lock protective device 17, that is, a closed position of the shutter plate 36, is maintained by the protective device opening operation restriction device 18 when the magnet lock 19 is locked. The magnet lock 19 can be unlocked with a magnet key 22, and due to the magnet lock 19 being unlocked the protective device opening operation restriction device 18 enables an opening operation of the cylinder lock protective device 17, that is, movement of the shutter plate 36 to an open position.

The magnet key 22 is mounted on a portable case 23 so that it can operate between a projecting position in which it projects from the case 23 (position shown by solid line in FIG. 2) and a storage position in which it is stored in the case 23 (position shown by chain line in FIG. 2), and a mechanical key 24 for unlocking the cylinder lock 15 is fixed to the case 23 so that it projects toward a direction opposite to the magnet key 22, which is at the projecting position.

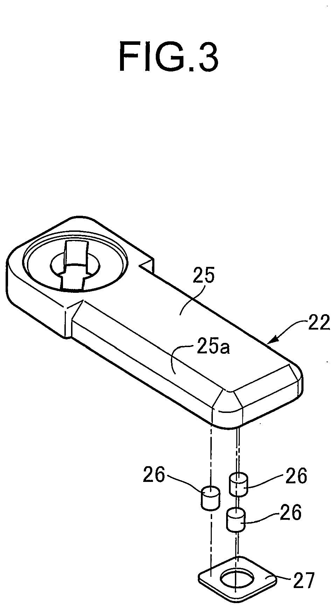

In FIG. 3, the magnet key 22 is formed by disposing a plurality of, for example three, magnets 26 in a magnet key main body 25, made of a synthetic resin, the magnet key main body 25 being formed lengthwise in the longitudinal direction of the case 23 so that the magnet key main body 25 can be stored in a storage recess portion 28 formed in the case 23 (see FIG. 2), one end part of the magnet key main body 25 being pivotably supported on the case 23.

Four housing recesses (not illustrated) are disposed along a virtual circle on one face of the other end part of the magnet key main body 25, and in a state in which the magnets 26 are housed in three housing recesses selected from the housing recesses so that either one of the N pole and the S pole faces the outer end of the housing recess, a lid member 27 formed into a ring shape so as to cover all of the housing recesses is glued to the one face of the other end part of the magnet key main body 25, thus forming the magnet key 22.

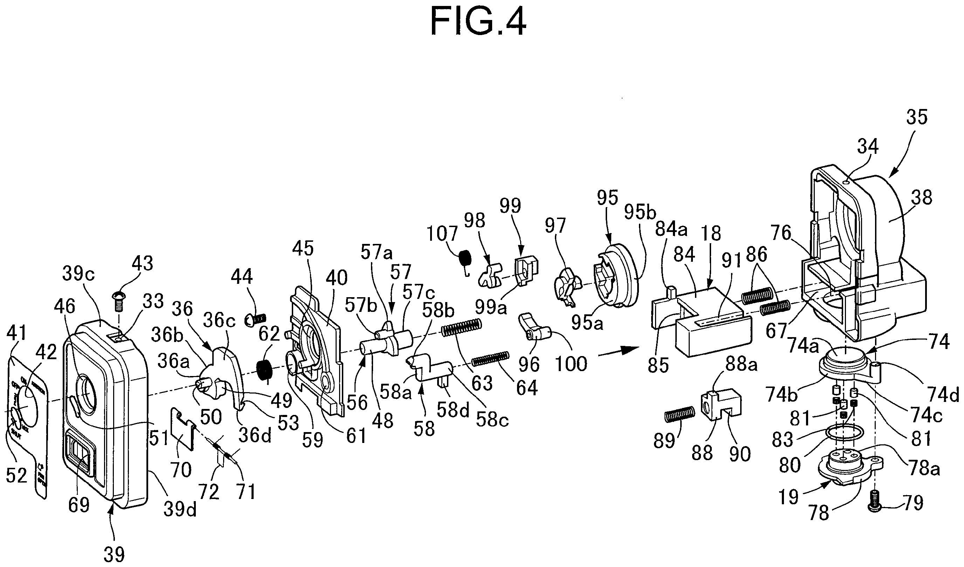

Referring in addition to FIG. 4 to FIG. 7, the cylinder lock protective device 17 includes a casing 35 covering an upper end part of the cylinder body 16 and the shutter plate 36 housed within the casing 35.

The casing 35, which has a mechanical key insertion hole 37 (see FIG. 2) for the mechanical key 24 to be inserted into the cylinder lock 15, is formed from a body 38 joined to the cylinder body 16, a case 39 secured to the body 38 so as to cover the shutter plate 36 and the body 38 from the side opposite to the cylinder body 16, and an inner cover plate 40 secured to the body 38 so as to be covered with the case 39.

The mechanical key 24 inserted into the cylinder lock 15 can pivot from a lock (LOCK) position in which the steering is put into a locked state to an on (ON) position via an off (OFF) position, and an engine, which is not illustrated, can be fired up by making the ignition switch 14 conduct at the ON position. Furthermore, the mechanical key 24 can be inserted into or removed from the cylinder lock 15 at either the LOCK position or the OFF position.

A cover sheet 41 is adhered to the surface of the case 39, the cover sheet 41 having an opening 42 corresponding to the mechanical key insertion hole 37, and the cover sheet 41 displaying LOCK, OFF, and ON positions so as to be disposed around the opening 42.

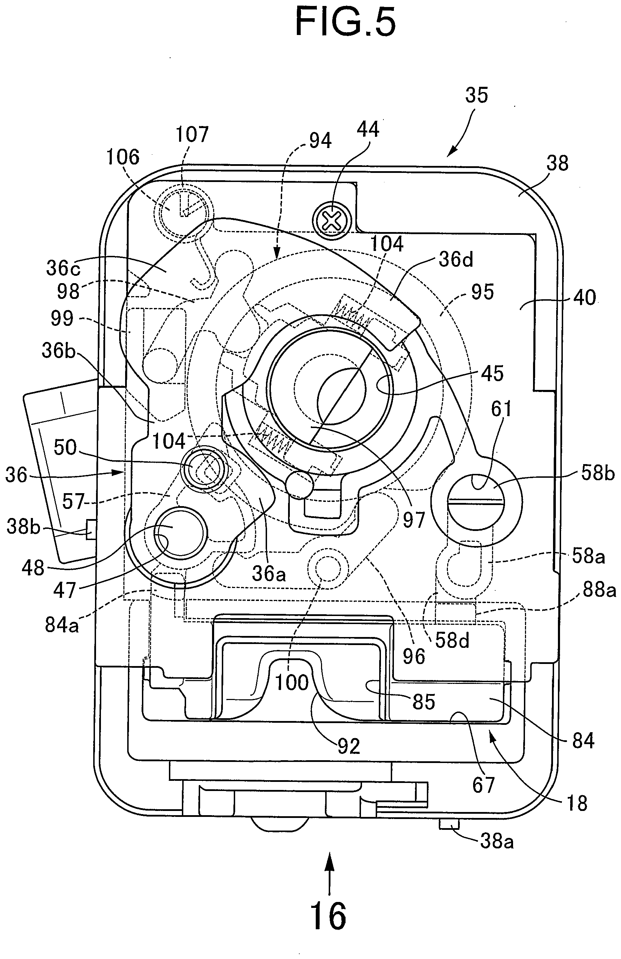

The shutter plate 36 is housed in the casing 35 so as to be capable of operating between a closed position in which the mechanical key insertion hole 37 is closed and an open position (the position shown in FIG. 5) in which the mechanical key insertion hole 37 is open, this shutter plate 36 being disposed between the case 39 and the inner cover plate 40.

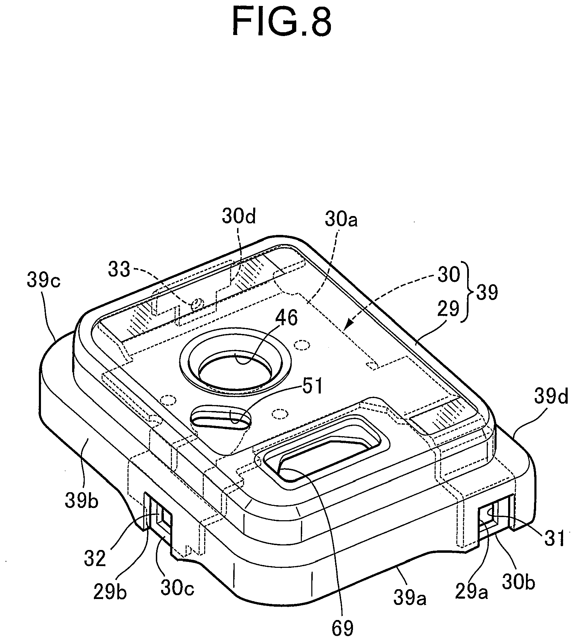

In FIG. 8, the case 39 is formed from a case main part 29, made of a resin, and a protector 30, made of a metal, having at least a flat plate portion 30a formed into a flat plate shape so as to cover the shutter plate 36 and being inserted and joined to the case main part 29. This case 39 is formed so as to cover the body 38 so that part of the body 38 on the side opposite to the cylinder lock 15 is fitted to the case 39 while having a plurality of side wall portions facing in mutually different directions, and in this embodiment the case 39 is formed into a substantially rectangular bowl shape having four side wall portions 39a, 39b, 39c, and 39d facing in mutually different directions.

Moreover, among the four side wall portions 39a to 39d of the case 39, at least two side wall portions are resiliently engaged with the body 38, and a side wall portion other than those side wall portions that are resiliently engaged with the body 38 is fastened to the body 38. In this embodiment the two side wall portions 39a and 39b are resiliently engaged with the body 38, and another side wall portion 39c is fastened to the body 38. The remaining side wall portion 39d may be resiliently engaged with the body 38.

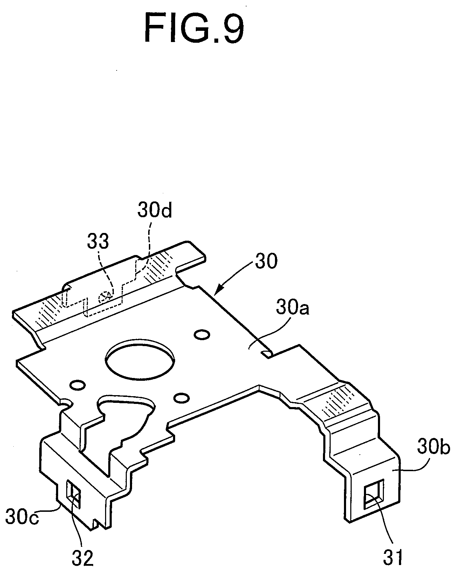

Referring in addition to FIG. 9, the protector 30 is formed so as to integrally have, in addition to the flat plate portion 30a, a latching piece 30b, a latching piece 30c, and a mounting piece 30d. The latching piece 30b, while forming part of the side wall portion 39a of the case 39, is disposed so as to face the outside through a cutout portion 29a formed in the case main part 29 and is connected to the flat plate portion 30a. The latching piece 30c, while forming part of the side wall portion 39b of the case 39, is disposed so as to face the outside through a cutout portion 29b formed in the case main part 29 and is connected to the flat plate portion 30a. The mounting piece 30d, while forming part of the side wall portion 39c of the case 39, is disposed so as to face the outside through a cutout portion 29c formed in the case main part 29 and is connected to the flat plate portion 30a. The latching pieces 30b and 30c are provided with rectangular latching holes 31 and 32, and a circular insertion hole 33 is provided in the mounting piece 30d.

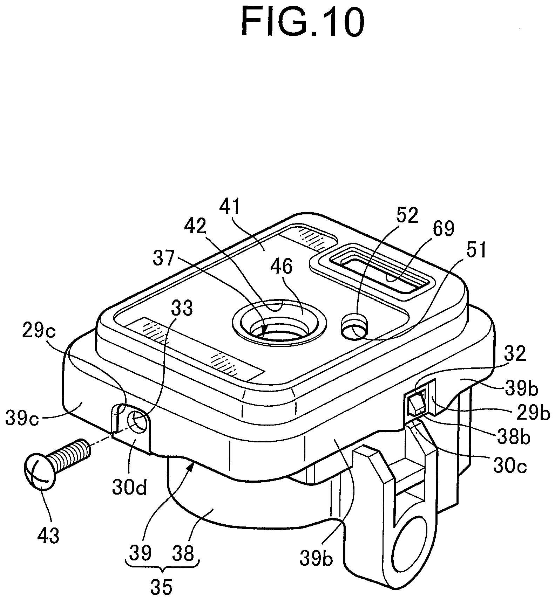

Referring in addition to FIG. 10, engagement projections 38a and 38b are provided integrally with the body 38, the engagement projections 38a and 38b being individually resiliently engaged with the latching holes 31 and 32, and the body 38 is resiliently engaged with the latching pieces 30b and 30c forming part of the side wall portions 39a and 39b. Furthermore, the body 38 is provided with a mounting hole 34 corresponding to the insertion hole 33 (see FIG. 4); a screw member 43 inserted through the insertion hole 33 is screwed into the mounting hole 34, and the mounting piece 30d forming part of the side wall portion 39c is fastened to the body 38. That is, the protector 30, made of a metal, forming part of the case 39 is mounted on the body 38.

The inner cover plate 40 is fixed to the body 38 so that the shutter plate 36 is in sliding contact with the inner cover plate 40, and the inner cover plate 40 positioned and engaged with the body 38 at a plurality of locations is secured to the body 38 by means of one screw member 44.

The mechanical key insertion hole 37 is formed from a circular first hole 45 provided in the inner cover plate 40 and a circular second hole 46 provided in the case 39 so as to correspond to the first hole 45, the shutter plate 36 closing the mechanical key insertion hole 37 by being present between the first hole 45 and the second hole 46.

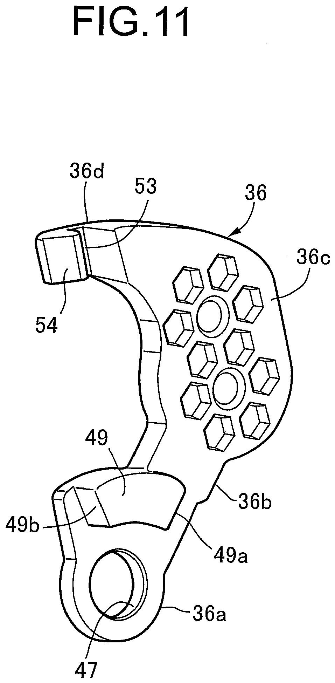

Referring in addition to FIG. 11, the shutter plate 36 is formed so as to integrally have a pivoting base portion 36a formed into a fan shape and having a circular support hole 47 at a position corresponding to the pivot of the fan, a link arm portion 36b extending from the pivoting base portion 36a along the radial direction of the support hole 47, a lid portion 36c connectedly provided on the link arm portion 36b while having a shape that can close the mechanical key insertion hole 37, and a restricting arm portion 36d extending from the lid portion 36c so as to sandwich the mechanical key insertion hole 37 between itself and the pivoting base portion 36a in a state in which the lid portion 36c opens the mechanical key insertion hole 37.

This shutter plate 36 is pivotably supported by a support shaft 48 inserted into the support hole 47 so that the shutter plate 36 can operate between a closed position in which the mechanical key insertion hole 37 is closed and an open position (the position shown in FIG. 5) in which the mechanical key insertion hole 37 is open.

A latching projection 49 extending in an arc shape with the central axis of the support hole 47 and the support shaft 48 as a center is projectingly provided integrally with a face, on the inner cover plate 40 side, of the pivoting base portion 36a, an operating shaft 50 is projectingly provided integrally with a face, on the case 39 side, of the pivoting base portion 36a, and insertion holes 51 and 52, through which the operating shaft 50 is inserted, are provided in the case 39 and the cover sheet 41 so as to be formed into an arc shape with the central axis of the support hole 47 and the support shaft 48 as a center.

Formed on a face, on the inner cover plate 40 side, of the extremity of the restricting arm portion 36d are a latching recess 53 and an inclined face 54 that is inclined so as to go away from the inner cover plate 40 in going from the latching recess 53 toward the extremity of the restricting arm portion 36d.

The closed position of the shutter plate 36 is restricted by closed position restriction means 56; this closed position restriction means 56 can switch between a restricted state in which the shutter plate 36 is restricted to the closed position and a restriction release state in which operation of the shutter plate 36 to the open position is allowed, and includes first and second restricting members 57 and 58.

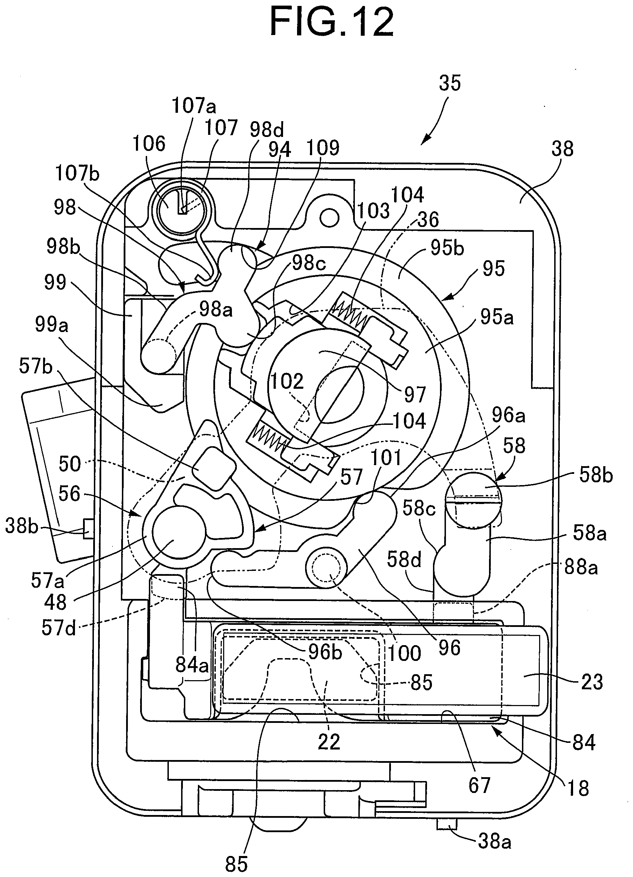

Referring in addition to FIG. 12 to FIG. 14, the first restricting member 57 is formed so as to have a flat-shaped pivoting plate portion 57a disposed between the body 38 and the inner cover plate 40, the support shaft 48, which is standingly provided on the pivoting plate portion 57a so as to extend through a first through hole 59 provided in the inner cover plate 40 and be inserted into the support hole 47 of the shutter plate 36, a first engagement projection portion 57b standingly provided on the pivoting plate portion 57a so as to abut against and engage with one peripheral end portion 49a of the latching projection 49 of the shutter plate 36, a cylindrical portion 57c connectedly provided on the pivoting plate portion 57a at right angles so as to be coaxial with the support shaft 48 and pivotably inserted into the body 38, and a first pressure-receiving projecting portion 57d projecting radially outward from an intermediate part in the axial direction of the cylindrical portion 57c. The inner cover plate 40 is provided with an elongated hole 60 through which the first engagement projection portion 57b is inserted so that the first engagement projection portion 57b can pivot around the central axis of the support shaft 48, the elongated hole 60 extending in an arc shape with the central axis of the support shaft 48 as a center.

Furthermore, the second restricting member 58 is formed so as to have a flat-shaped linking plate portion 58a disposed between the body 38 and the inner cover plate 40, a second engagement projection portion 58b projectingly provided on one end part of the linking plate portion 58a so as to extend through a second through hole 61 provided in the inner cover plate 40 while being capable of engaging with the latching recess 53, a rod-shaped portion 58c inserted into the body 38 via the other end part of the linking plate portion 58a so as to extend in parallel to the support shaft 48, and a second pressure-receiving projecting portion 58d projecting radially outward from the rod-shaped portion 58c.

The shutter plate 36 is urged toward the open position side by means of a first torsion spring 62; the first torsion spring 62 is disposed between the pivoting base portion 36a of the shutter plate 36 and the inner cover plate 40 so as to surround the support shaft 48, one end portion 62a of the first torsion spring 62 is engaged with the inner cover plate 40, and the other end portion 62b of the first torsion spring 62 abuts against and engages with the other peripheral end portion 49b of the latching projection 49 of the shutter plate 36.

Furthermore, an urging force toward the closed position side can be exerted on the shutter plate 36 by means of a coil-shaped second torsion spring 63 that exhibits an urging force larger than that of the first torsion spring 62. This second torsion spring 63 is provided between the cylindrical portion 57c and the body 38 while having part thereof inserted into the cylindrical portion 57c; one end portion 63a of the second torsion spring 63 is engaged with the body 38, and the other end portion of the second torsion spring 63 is engaged with a groove (not illustrated) formed in an inner face of the cylindrical portion 57c so as to extend in the axial direction.

In a state in which the first engagement projection portion 57b of the first restricting member 57 abuts against the one peripheral end portion 49a of the latching projection 49 of the shutter plate 36, the second torsion spring 63 exhibits a spring force that urges the shutter plate 36 toward the closed position side together with the first restricting member 57 as well as an axial spring force that urges the first restricting member 57 in a direction in which the pivoting plate portion 57a of the first restricting member 57 moves toward the inner cover plate 40.

Since the spring force of the second torsion spring 63 urging the shutter plate 36 toward the closed position side is larger than the spring force of the first torsion spring 62 urging the shutter plate 36 toward the open position side, in a state in which the first engagement projection portion 57b of the first restricting member 57 abuts against the one peripheral end portion 49a of the latching projection 49 of the shutter plate 36, pivoting of the shutter plate 36 at the closed position toward the open position side is restricted, and the shutter plate 36 is restricted to the closed position.

Furthermore, a first coil spring 64 is provided in a compressed state between the body 38 and the rod-shaped portion 58c of the second restricting member 58; the second restricting member 58 is urged toward the side on which the second engagement projection portion 58b projects from the inner cover plate 40 by means of the spring force exhibited by the first coil spring 64, and the shutter plate 36 is also restricted to the closed position by the second engagement projection portion 58b engaging with the latching recess 53 of the shutter plate 36.

A state in which the shutter plate 36 is restricted to the closed position by the closed position restriction means 56 can be released by the protective device opening operation restriction device 18; this protective device opening operation restriction device 18 includes the magnet lock 19 that can be unlocked by the magnet key 22 and is arranged so as to release the restricted state of the closed position restriction means 56 by operation in response to pushing in the magnet key 22 in an unlocked state of the magnet lock 19.

The protective device opening operation restriction device 18 shares the casing 35 with the cylinder lock protective device 17, and the body 38 of the casing 35 is provided with a slide recess 67 opening on the case 39 side in a section that is offset from the inner cover plate 40 while having a substantially rectangular box-shaped cross-sectional shape and extending in parallel to the central axis of the support shaft 48. Furthermore, a magnet key insertion hole 69 having a shape corresponding to the cross-sectional shape of the magnet key 22 is provided in a portion, corresponding to the slide recess 67, of the case 39. Moreover, as shown in FIG. 4, a lid member 70 for closing the magnet key insertion hole 69 is pivotably supported on a reverse face of the case 39 via a pin 71, and the lid member 70 is urged toward the closed side by a spring 72.

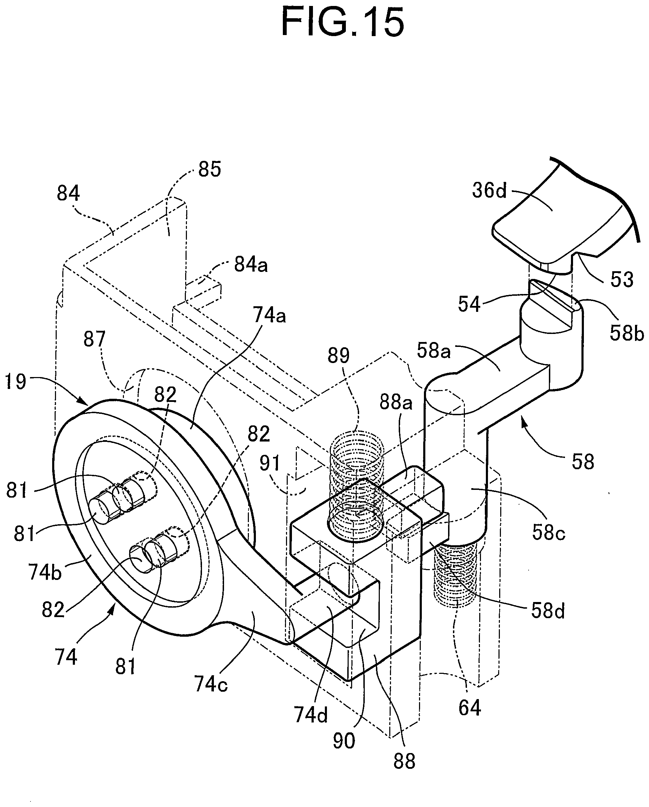

Referring in addition to FIG. 15, the magnet lock 19 is disposed on the casing 35 so as to face the slide recess 67 and includes a rotor 74 pivotably supported on the body 38. The rotor 74 is formed from a non-magnetic material so as to integrally have a disk-shaped portion 74a, a collar portion 74b protruding radially outward from one end of the disk-shaped portion 74a, a link arm portion 74c extending outward from one location in the peripheral direction of the collar portion 74b, and a third engagement projection portion 74d projecting toward the same side as the disk-shaped portion 74a from the outer end of the link arm portion 74c.

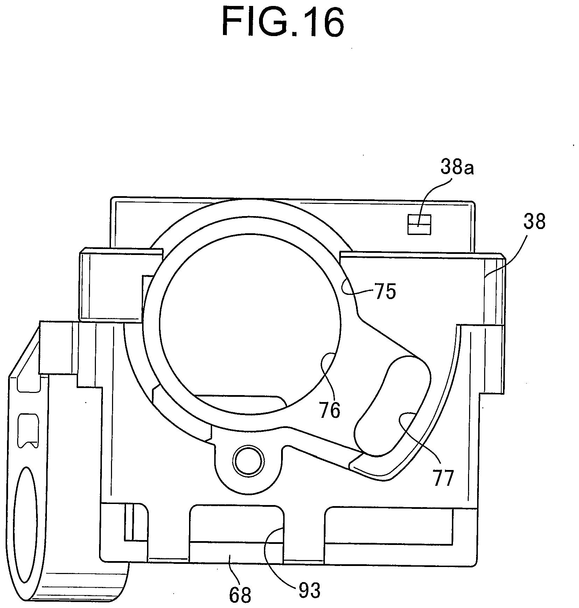

As shown in FIG. 16, provided in the body 38 of the casing 35 are a fitting recess 75, a circular fitting hole 76, and an elongated hole 77, the fitting recess 75 having the collar portion 74b and the link arm portion 74c of the rotor 74 pivotably fitted thereinto, the fitting hole 76 having the disk-shaped portion 74a of the rotor 74 pivotably fitted thereinto while having its outer end opening in the fitting recess 75 and having its inner end opening on a side face of the slide recess 67, and the elongated hole 77 having its outer end opening in the fitting recess 75 so that the third engagement projection portion 74d is inserted thereinto and having its inner end opening on the side face of the slide recess 67. The elongated hole 77 is formed into an arc shape with the pivot axis of the rotor 74 as a center so as to allow pivoting of the rotor 74 within the fitting recess 75 and the fitting hole 76.

As shown in FIG. 4, the fitting recess 75 is closed by means of a lid member 78 that integrally has a supporting projecting portion 78a fitted into the disk-shaped portion 74a of the rotor 74 and supporting pivoting of the rotor 74, and that is secured to the body 38 by means of one screw member 79, an O ring 80 being disposed between a base part of the supporting projecting portion 78a and the rotor 74.

A plurality of, for example three, pins 81, which are magnets, are slidably fitted into the extremity of the supporting projecting portion 78a so as to be capable of moving between a position in which they engage with three of four latching recesses 82 provided in one end of the disk-shaped portion 74a of the rotor 74 and a position in which engagement is released, each pin 81 being resiliently urged toward the side on which it engages with the rotor 74 by means of second coil springs 83 individually corresponding thereto.

The three pins 81 are fitted into the latching recesses 82 so as to be disposed at positions corresponding to the three magnets 31 of the magnet key 22 when the magnet key 22 opposes the other end of the disk-shaped portion 74a of the rotor 74. Moreover, the pins 81 are disposed so that the same pole as the pole, on the magnet lock 19 side, of the magnet 26 of the magnet key 22 is disposed on the inner end side of the latching recess 82, and when a legitimate magnet key 22 is disposed at a position opposing the other end of the disk-shaped portion 74a of the rotor 74 the pin 81 can move to the side that releases engagement with the rotor 74 against the resilient urging force of the second coil spring 83, thereby allowing pivoting of the rotor 74.

A magnet key follower member 84 is slidably housed in the slide recess 67 of the body 38 of the casing 35, the magnet key follower member 84 moving together with the magnet key 22 in response to the magnet key 22 being inserted into the casing 35.

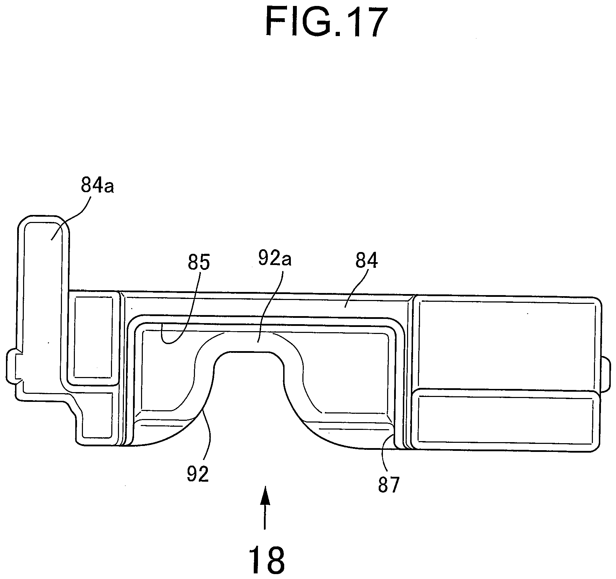

Referring in addition to FIG. 17 to FIG. 19, the magnet key follower member 84 is formed into a rectangular box shape so as to have a magnet key insertion recess 85 and be slidably housed in the slide recess 67, the magnet key 22 opening the lid member 70 and being inserted into the magnet key insertion recess 85 of the magnet key follower member 84 through the magnet key insertion hole 69 of the case 39.

The extremity of the magnet key 22, which is inserted into the magnet key insertion recess 85, abuts against a blocked end wall of the magnet key insertion recess 85, and pushing in the magnet key 22 makes the magnet key follower member 84 slide within the slide recess 67. Moreover, a lattice-shaped receiving part 68 is provided integrally with the body 38, the lattice-shaped receiving part 68 being disposed on an end part of the slide recess 67 on the side opposite to the case 39, and a third coil spring 86 is provided in a compressed state between the magnet key follower member 84 and the receiving part 68, the magnet key follower member 84 being spring-biased to the side on which it is moved toward the case 39 by means of the spring force exhibited by the third coil spring 86.

A window 87 is formed in a side wall, looking out on the magnet lock 19 side, of the magnet key follower member 84 lengthwise along the extending direction of the slide recess 67, the magnet key 22 inserted into the magnet key insertion recess 85 looking out on the magnet lock 19 side via the window 87. The magnet key follower member 84 moves together with the magnet key 22 in response to insertion of the magnet key 22 so as to make the magnet key 22 oppose the blocked end outer face of the rotor 74 of the magnet lock 19, thus not only enabling the magnet key 22 to be inserted into an unlocked position in which the magnet lock 19 is unlocked but also enabling the magnet key 22 to be pushed in further from the unlocked position to thus move to a pushed-in position.

Retained on the magnet key follower member 84 is a restriction release member 88 that engages with the third engagement projection portion 74d of the rotor 74, movement of the restriction release member 88 being restricted by the rotor 74 in a state in which the magnet lock 19 is locked. Provided between the magnet key follower member 84 and the restriction release member 88 is a fourth coil spring 89 exhibiting a resilient force that pushes the restriction release member 88 toward the side that pivots the rotor 74 in response to movement of the magnet key follower member 84 toward the pushed-in position side.

The restriction release member 88 has a substantially C-shaped form opening toward the link arm portion 74c of the rotor 74 while having a latching groove 90 with which the third engagement arm portion 74d engages. Provided in the magnet key follower member 84 is a housing hole 91 opening on the second restricting member 58 side and on the third engagement arm portion 74d side of the rotor 74 while having opposite ends in the extending direction of the slide recess 67 blocked. The restriction release member 88 is housed within the housing hole 91, and the fourth coil spring 89 housed within the housing hole 91 is provided in a compressed state between the magnet key follower member 84 and the restriction release member 88.

When the magnet key 22 and the magnet key follower member 84 are pushed in further from the unlocked position, the pressing force due to movement of the magnet key follower member 84 is transmitted to the link arm portion 74c of the rotor 74 via the fourth coil spring 89 and the restriction release member 88, and the rotor 74 in a state in which it can pivot due to the magnet lock 19 being in an unlocked state pivots in response to movement of the restriction release member 88.

Furthermore, a first pressing projecting portion 84a is projectingly provided on the magnet key follower member 84, the first pressing projecting portion 84a being capable of engaging, from the pivoting base portion 36a side, with the first pressure-receiving projecting portion 57d provided on the cylindrical portion 57c of the first restricting member 57. When the magnet key follower member 84 having the first pressing projecting portion 84a engaged with the first pressure-receiving projecting portion 57d is pushed in further from the unlocked position in response to the magnet key follower member 84 being pushed in by the magnet key 22, the first restricting member 57 is pushed down against the axial resilient force of the second torsion spring 63, the first engagement projection portion 57b of the first restricting member 57 is thereby moved to a position where engagement with the latching projection 49 of the shutter plate 36 is released, and restriction of the shutter plate 36 to the closed position by means of the first restricting member 57 is released. In this process, the support shaft 48 of the first restricting member 57 will not be disengaged from the support hole 47 of the shutter plate 36, and support for pivoting of the shutter plate 36 by means of the support shaft 48 is maintained.

Furthermore, the restriction release member 88 is provided with a second pressing projecting portion 88a so as to project from the restriction release member 88 on the side opposite to the latching groove 90, the second pressing projecting portion 88a being capable of engaging, from the linking plate portion 58a side, with the second pressure-receiving projecting portion 58d provided on the rod-shaped portion 58c of the second restricting member 58. When the restriction release member 88 having the second pressing projecting portion 88a engaged with the second pressure-receiving projecting portion 58d is pushed in further from the unlocked position in response to the magnet key follower member 84 being pushed in by the magnet key 22, the second engagement projection portion 58b of the second restricting member 58 moves to a position where engagement with the latching recess 53 of the shutter plate 36 is released, and restriction of the shutter plate 36 to the closed position by means of the second restricting member 58 is also released. If the magnet key follower member 84 is forcibly pushed in using a different type of key or an unauthorized member without the magnet lock 19 being unlocked, although restriction of the shutter plate 36 to the closed position by the first restricting member 57 is released in response to movement of the magnet key follower member 84, since the rotor 74 of the magnet lock 19 will not pivot and movement of the restriction release member 88 is prevented, the magnet key follower member 84 slides while compressing the fourth coil spring 89, restriction of the shutter plate 36 at the closed position by the second restricting member 58 will not be released, and the shutter plate 36 remains restricted to the closed position.

That is, the protective device opening operation restriction device 18 is formed from the magnet lock 19, the magnet key follower member 84, the restriction release member 88, and the third and fourth coil springs 86 and 89.

In a state in which the restricted state provided by the closed position restriction means 56 in which the shutter plate 36 is restricted to the closed position is released by the protective device opening operation restriction device 18, the spring force of the second torsion spring 63 does not act on the shutter plate 36, and the shutter plate 36 is automatically pivoted toward the open position side by means of the spring force of the first torsion spring 62.

Furthermore, the magnet key follower member 84 is provided with a first discharge hole 92 via which a lower part of the magnet key insertion recess 85 communicates with the outside, and an inclined face 92a is formed on an open end of the first discharge hole 92 that is open to the magnet key insertion recess 85, the inclined face 92a being for smoothly discharging dirt, rainwater, etc. that has entered the magnet key insertion recess 85.

On the other hand, the body 38 of the casing 35 is provided with a second discharge hole 93 via which a lower part of the slide recess 67 communicates with the outside in order to drain dirt or water that has entered the slide recess 67, this second discharge hole 93 being formed by the lattice-shaped receiving part 68. Moreover, the second discharge hole 93 is provided in the body 38 of the casing 35 so as to communicate with at least part of the first discharge hole 92 when the magnet key follower member 84 reaches the pushed-in position.

In a state in which the shutter plate 36 has automatically been pivoted toward the open position by means of the spring force of the first torsion spring 62, the latching projection 49 of the shutter plate 36 reaches a position where it moves toward and opposes, in a direction along the axis of the support shaft 48, the first engagement projection portion 57b of the first restricting member 57, and even when the pressing force acting on the first pressure-receiving projecting portion 57d from the first pressing projecting portion 84a is released due to the magnet key follower member 84 being returned to the original position by means of the spring force of the third coil spring 86 by pulling the magnet key 22 out of the magnet key follower member 84, the first engagement projection portion 57b abuts against the latching projection 49 of the shutter plate 36 in the axial direction, and the first restricting member 57 remains pushed down. Furthermore, the second restricting member 58 is returned to its original position, due to release of the pressing force acting on the second pressure-receiving projecting portion 58d from the second pressing projecting portion 88a, by means of the spring force of the first coil spring 64.

Transmission of the urging force from the second torsion spring 63 to the shutter plate 36 is controlled by closed position side urging force control means 94; this closed position side urging force control means 94 stops the function of the first torsion spring 62 at least when the shutter plate 36 operates from the closed position to the open position and makes the urging force of the second torsion spring 63 act on the shutter plate 36 in response to pulling out of the mechanical key 24 at a predetermined pivoting position from the mechanical key insertion hole 37 in a state in which the shutter plate 36 is at the open position.

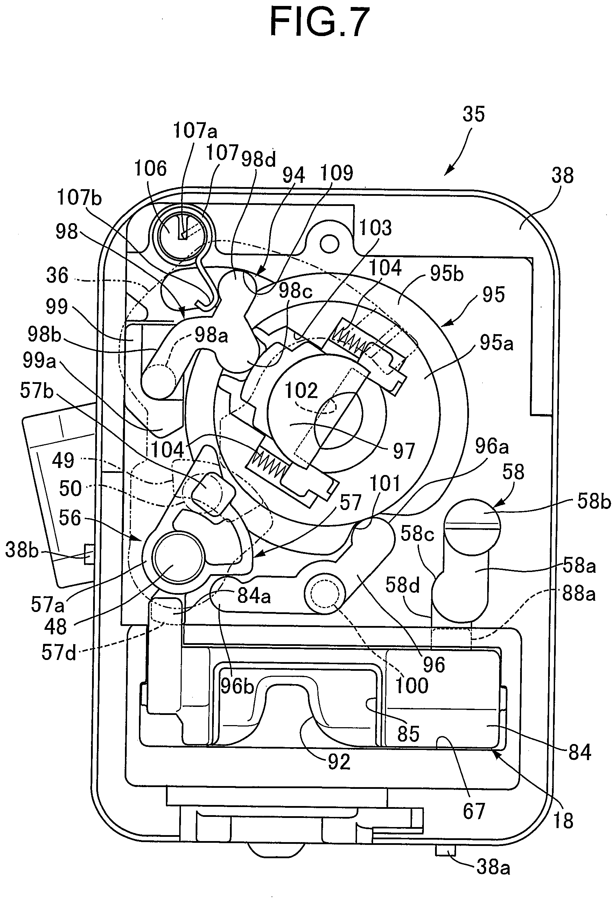

Referring to FIG. 7, the closed position side urging force control means 94 includes a disk-shaped cam plate 95 pivotably housed between the body 38 and the inner cover plate 40, a lever member 96 disposed outside the cam plate 95 so as to be disposed between the first and second restricting members 57 and 58 in the peripheral direction of the cam plate 95, a push plate 97 fitted into the cam plate 95 so that it can slide in the radial direction of the cam plate 95, a follower 98 abutting against the push plate 97 when the cam plate 95 is at a pivoting position that corresponds to the LOCK position, and a slide member 99 linked to the follower 98.

The cam plate 95 is relatively non-pivotably linked to an inner cylinder (not illustrated) of the cylinder lock 15 and is formed so as to integrally have a disk portion 95a and a collar portion 95b protruding in the radially outward direction from an end part, on the body 38 side, of the disk portion 95a. Moreover, the pivoting plate portion 57a of the first restricting member 57 is disposed between the collar portion 95b and the inner cover plate 40.

The lever member 96 is pivotably supported on the body 38 by means of a pin 100 parallel to the support shaft 48 such that one end portion 96a can abut against the outer periphery of the collar portion 95b of the cam plate 95 and the other end portion 96b abuts against the pivoting plate portion 57a of the first restricting member 57, the pin 100 being formed integrally with the lever member 96. Formed in the outer periphery of the collar portion 95b is a recess 101 housing the one end part 96a of the lever member 96 when the cam plate 95 is at a pivoting position corresponding to the LOCK position. When the cam plate 95 pivots from the LOCK position to the OFF position or the ON position, the one end portion 96a of the lever member 96 is disengaged from the recess 101 and pivoted so as to be in sliding contact with the outer periphery of the collar portion 95b. The other end portion 96b of the lever member 96 is made to abut against the pivoting plate portion 57a of the first restricting member 57 so as to oppose the pivoting direction of the first restricting member 57 by means of the urging force of the second torsion spring 63.

A rectangular through hole 102 corresponding to the mechanical key insertion hole 37 is formed in a center part of the cam plate 95 so as to have a rectangular cross-sectional shape, and a fitting groove 103 having its inner end opening in the through hole 102 and its outer end opening on the outer periphery of the disk portion 95a is provided so as to extend in the radial direction of the cam plate 95. The push plate 97 is slidably fitted into the fitting groove 103, and a pair of springs 104 are provided between the cam plate 95 and the push plate 97 so as to urge the push plate 97 toward the side on which it closes the through hole 102, that is, in the radially inward direction of the cam plate 95.

An inner end part of the push plate 97 is formed so that it can block the through hole 102, and an outer end part of the push plate 97 is formed into an arc shape having the same curvature as that of the outer periphery of the disk portion 95a of the cam plate 95. When the inner end part of the push plate 97 is at a position where the through hole 102 is blocked, the outer end part of the push plate 97 is present at a position further inward than the outer periphery of the disk portion 95a, and when the inner end part of the push plate 97 is at a position where the through hole 102 is opened, the outer end part of the push plate 97 is at a position where it is flush with the outer periphery of the disk portion 95a.

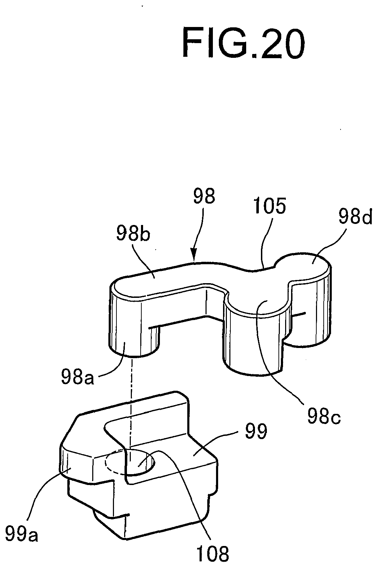

Referring in addition to FIG. 20, the follower 98 is disposed on the side opposite to the second restricting member 58 with respect to the cam plate 95, and integrally has a follower main portion 98b extending along the outer periphery of the cam plate 95 while having a link pin 98a in one end part and being capable of having part thereof superimposed on the collar portion 95b of the cam plate 95, a fitting portion 98c extending from the other end part of the follower main portion 98b toward the disk portion 95a of the cam plate 95, and a short columnar portion 98d linked to the other end part of the follower main portion 98b so as to be disposed on the outside of the collar portion 95b. A spring latching recess 105 is formed in a side face, on the side opposite to the fitting portion 98c, of the follower main portion 98b.

The extremity of the fitting portion 98c can abut against the outer periphery of the disk portion 95a of the cam plate 95, and when the cam plate 95 is at the LOCK position, the extremity of the fitting portion 98c abuts against the outer end part of the push plate 97.

Moreover, a third torsion spring 107 surrounds a supporting projection 106 provided on the body 38 and having a circular cross section, and has one end portion 107a engaged with the body 38 and the other end portion 107b abutting against and engaging with the short columnar portion 98d on the other end part of the follower 98 so that part of the other end portion 107b can be housed in the spring latching recess 105. The spring force exhibited by the third torsion spring 107 acts on the follower 98 in a direction in which the fitting portion 98c of the follower 98 is pushed against the outer periphery of the disk portion 95a of the cam plate 95 and a direction in which the follower 98 is pushed toward the first restricting member 57 side. In order to guide movement of the follower 98 accompanying movement of the push plate 97 and pivoting of the cam plate 95, the body 38 has a guide recess 109 formed therein, the extremity of the short columnar portion 98d of the follower 98 being fitted into the guide recess 109.

The slide member 99 is disposed between the follower 98 and the first restricting member 57 and supported on the body 38 so that it can slide in a direction in which it moves toward and away from the first restricting member 57, and a bottomed fitting hole 108 into which the link pin 98a of the follower 98 is pivotably fitted is provided in the slide member 99.

An abutment portion 99a is provided integrally with an end part, on the first restricting member 57 side, of the slide member 99 so that it can overlap the collar portion 95b of the cam plate 95 in the axial direction, the abutment portion 99a being capable of being made to abut against the pivoting plate portion 57a of the first restricting member 57 from the same direction as the pivotingly urging direction of the first restricting member 57 by means of the second torsion spring 63.

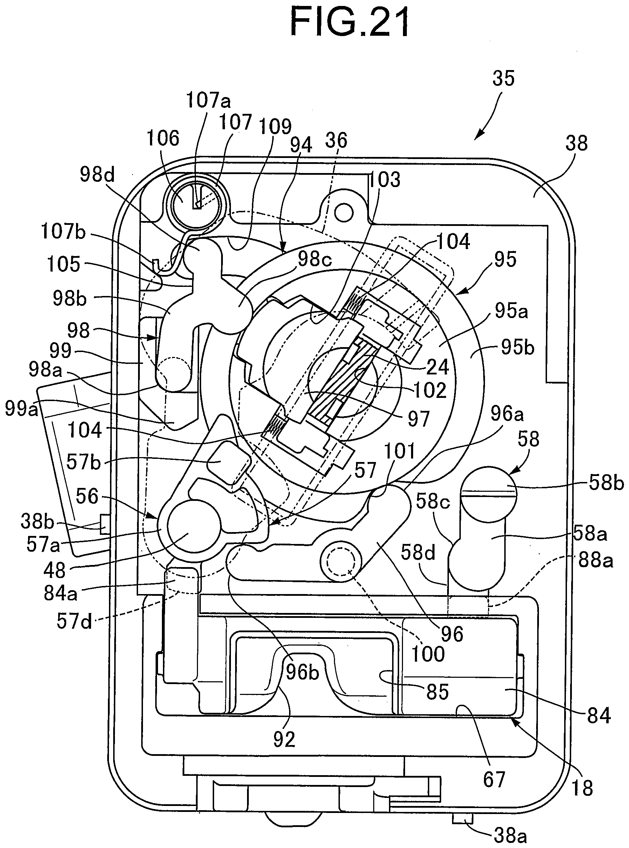

As shown in FIG. 7, when the shutter plate 36 is at the open position and the cam plate 95 is at the LOCK position, the one end portion 96a of the lever member 96 is housed in the recess 101 on the outer periphery of the collar portion 95b of the cam plate 95, the follower 98 is in a state in which the fitting portion 98c abuts against the outer end part of the push plate 97 at a position where the through hole 102 is closed, and the first engagement projection portion 57b of the first restricting member 57 is in a state in which it abuts against the latching projection 49 of the shutter plate 36 in a direction along the axis of the support shaft 48. In this state, as shown in FIG. 21, when the mechanical key 24 is inserted into the mechanical key insertion hole 37 and the through hole 102, the push plate 97 and the follower 98, which has the fitting portion 98c abutting against the outer end part of the push plate 97, are pushed out in the radially outward direction of the cam plate 95 against the spring force of the spring 104 urging the push plate 97, and the slide member 99 thus slides to the side on which it moves toward the first restricting member 57.

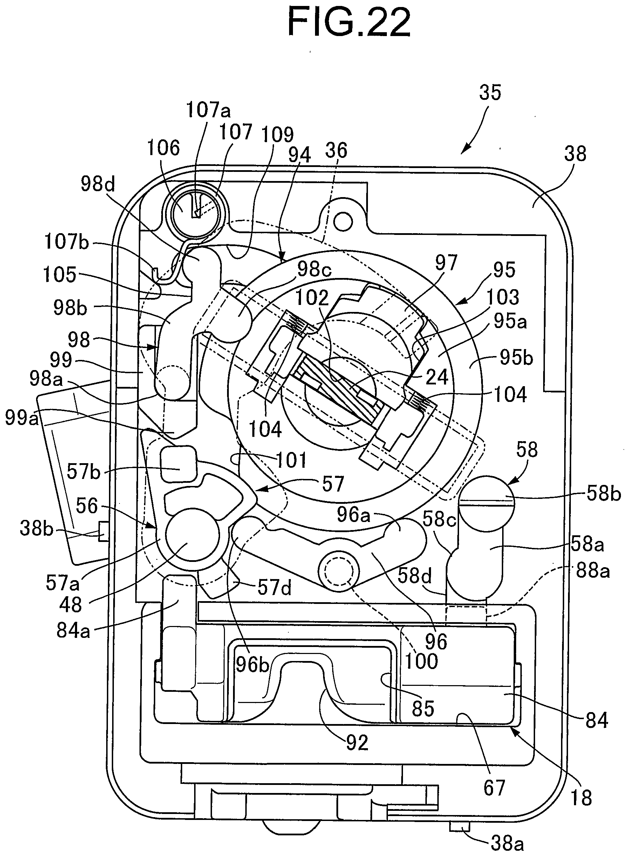

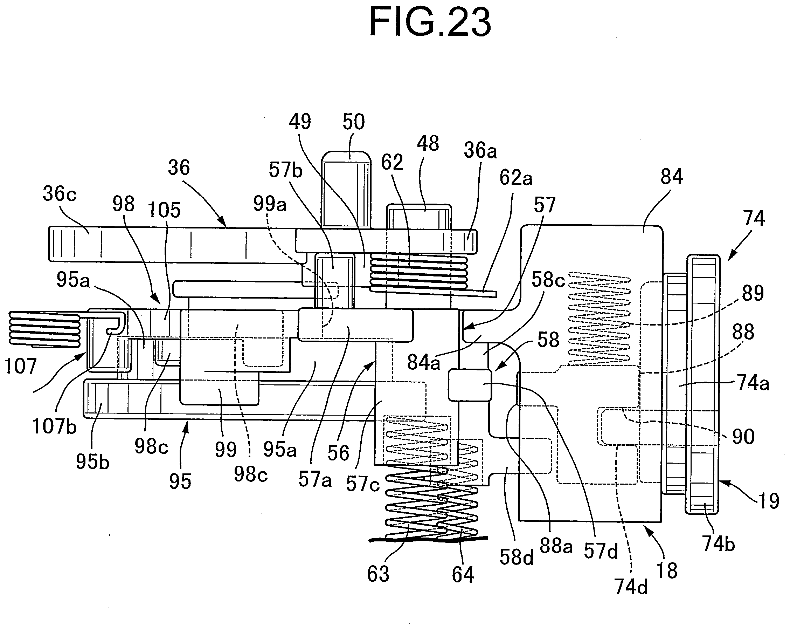

When the mechanical key 24 is pivoted from the LOCK position to the OFF position, as shown in FIG. 22, the lever member 96 pivots to a position in which the one end portion 96a is disengaged from the recess 101 of the collar portion 95b of the cam plate 95 and is in sliding contact with the outer periphery of the collar portion 95b, and the other end portion 96b of the lever member 96 pivots the pivoting plate portion 57a of the first restricting member 57 in the counterclockwise direction in FIG. 22. The first restricting member 57 is thereby pivoted to a position where the first engagement projection portion 57b abuts against and engages with the one peripheral end portion 49a of the latching projection 49 of the shutter plate 36 and where the first pressure-receiving projecting portion 57d is displaced from the first pressing projecting portion 84a of the magnet key follower member 84 in the peripheral direction of the support shaft 48; in response to release of a state in which the first engagement projection portion 57b abuts against the latching projection 49 of the shutter plate 36 at the LOCK position, as shown in FIG. 23, the first restricting member 57 moves in a direction in which the pivoting plate portion 57a is made to move toward the shutter plate 36 by means of the axial resilient force of the second torsion spring 63, and the first engagement projection portion 57b is made to move toward and oppose the one peripheral end portion 49a of the first latching projection 49 in the peripheral direction of the support shaft 48 and, furthermore, abut against and engage with the one peripheral end portion 49a of the first latching projection 49 by means of the spring force of the second torsion spring 63.

In this arrangement, if pivoting of the first restricting member 57 is allowed, due to the spring force of the second torsion spring 63 acting on the shutter plate 36 via the first restricting member 57, the shutter plate 36 is pivotingly urged toward the closed position side, but pivoting of the first restricting member 57 is prevented by the lever member 96 and the slide member 99. That is, when at the OFF position the pivoting plate portion 57a of the first restricting member 57 is pivoted in the counterclockwise direction in FIG. 22 by means of the lever member 96, the pivoting plate portion 57a pivots so that part thereof passes between the abutment portion 99a at the extremity of the slide member 99 and the collar portion 95b of the cam plate 95, the first restricting member 57 is moved by means of the axial resilient force of the second torsion spring 63 in a direction in which the pivoting plate portion 57a moves toward the shutter plate 36, as shown in FIG. 22 the abutment portion 99a is thereby made to abut against the pivoting plate portion 57a so as to oppose the pivotingly urging direction of the first restricting member 57 by means of the spring force of the second torsion spring 63, and the first restricting member 57 is therefore prevented from pivoting. Furthermore, the other end portion 96b of the lever member 96 remains abutting against the pivoting plate portion 57a of the first restricting member 57, and since the one end portion 96a of the lever member 96 abuts against the outer periphery of the collar portion 95b of the cam plate 95, pivoting of the first restricting member 57 is also prevented by the lever member 96.

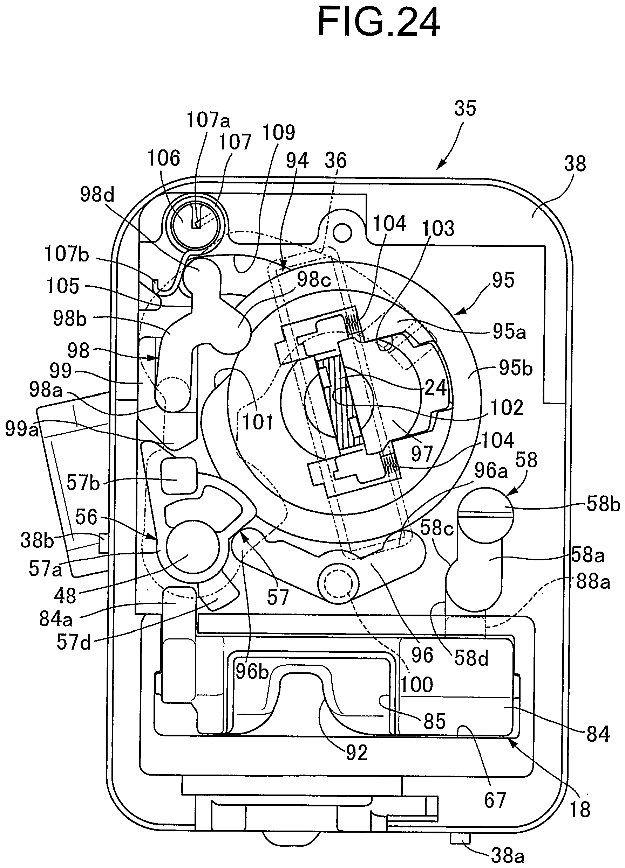

When the mechanical key 24 is pivoted to the ON position, the cam plate 95 pivots to the position shown in FIG. 24, but the lever member 96, the follower 98, and the slide member 99 do not change from the state at the OFF position shown in FIG. 22 and FIG. 23, and the first restricting member 57 does not pivot.

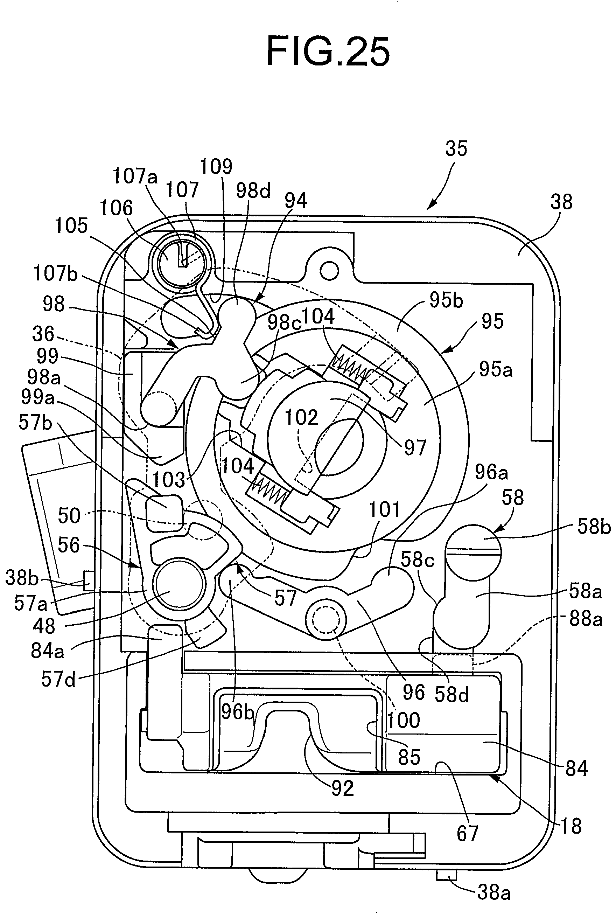

When the mechanical key 24 is returned to the LOCK position and the mechanical key 24 is pulled out, as shown in FIG. 25, the push plate 97 of the cam plate 95 returns to a position in which the through hole 102 is closed, the slide member 99 returns, via the follower 98, to a position in which engagement with the first restricting member 57 is released, and since the recess 101 on the outer periphery of the collar portion 95b of the cam plate 95 reaches a position corresponding to the one end portion 96a of the lever member 96, the first restricting member 57 can pivot the lever member 96 so that the one end portion 96a is housed in the recess 101, the shutter plate 36 is thereby automatically pivoted to the closed position by means of the spring force obtained by subtracting the spring force of the first torsion spring 62 from the spring force of the second torsion spring 63, and this pivoting of the shutter plate 36 to the closed position makes the inclined face 54 at the extremity of the restricting arm portion 36d of the shutter plate 36 abut against the second engagement projection portion 58b of the second restricting member 58 to thus push down the second restricting member 58 against the urging force of the first coil spring 64, thereby engaging the second engagement projection portion 58b of the second restricting member 58 with the latching recess 53 at the extremity of the restricting arm portion 36d.

That is, the closed position side urging force control means 94 stops the function of the first torsion spring 62 when the shutter plate 36 operates from the closed position to the open position, and makes the urging force of the first torsion spring 62 act on the shutter plate 36 in response to pulling the mechanical key 24 at the LOCK position out of the mechanical key insertion hole 37 in a state in which the shutter plate 36 is at the open position.

The mechanical key 24 at the OFF position could be pulled out of the mechanical key insertion hole 37, and in this case since the closed position side urging force control means 94 does not make the urging force of the second torsion spring 63 act on the shutter plate 36, at the OFF position the shutter plate 36 does not automatically pivot to the closed position side. Pivoting the part of the operating shaft 50 projecting from the casing 35 enables the shutter plate 36 to be pivoted to the closed position, but in this process since the first restricting member 57 is in a state in which pivoting is prevented by means of the slide member 99 and the lever member 96, the shutter plate 36 pivots while leaving behind the first restricting member 57, and the closed position of the shutter plate 36 is restricted by the second engagement projection portion 58b of the second restricting member 58 engaging with the latching recess 53. Furthermore, when opening the shutter plate 36, the magnet key 22 may be inserted into the magnet key follower member 84 and pushed down, and due to the second restricting member 58 being pushed down the second engagement projection portion 58b is disengaged from the latching recess 53, restriction of the closed position of the shutter plate 36 by means of the second restricting member 58 is released, and since the spring force of the second torsion spring 63 is not acting on the shutter plate 36, the shutter plate 36 is automatically pivoted to the open position by means of the spring force of the first torsion spring 62.

The operation of this embodiment is now explained; since the protective device opening operation restriction device 18, which has the magnet lock 19 that, when locked, maintains the closed state of the cylinder lock protective device 17 and allows an opening operation by the cylinder lock protective device 17 in response to the magnet lock 19 being unlocked by means of the magnet key 22, includes the casing 35 that has the slide recess 67 and has the magnet lock 19 disposed so as to face the slide recess 67, the magnet key follower member 84 that, while having the magnet key insertion recess into which the magnet key 22 can be inserted, is slidably fitted into the slide recess 67 and not only enables movement to the unlocked position in which the magnet lock 19 is unlocked by pushing in the magnet key 22 but also enables movement to a pushed-in position by pushing in the magnet key 22 further from the unlocked position, and the restriction release member 88 that operates in response to movement of the magnet key follower member 84 from the unlocked position to the pushed-in position and enables an opening operation by the cylinder lock protective device 17, it is possible, by merely pushing the magnet key 22 inserted into the magnet key follower member 84 in one direction, to enable an opening operation by the cylinder lock protective device 17, thus making the operation more smooth.

Furthermore, since the magnet key follower member 84 is provided with the first discharge hole 92, via which the lower part of the magnet key insertion recess 85 communicates with the outside, and the casing 35 is provided with the second discharge hole 93, via which the lower part of the slide recess 67 communicates with the outside, even if dirt, rainwater, etc. enters the slide recess 67 of the casing 35 and the magnet key insertion recess 85 of the magnet key follower member 84 from the outside, the dirt, rainwater, etc. can be discharged to the outside, thus enabling any harmful effect due to dirt, rainwater, etc. entering the casing 35 and the magnet key follower member 84 from the outside and accumulating to be eliminated.

Moreover, since the second discharge hole 93 is provided in the casing 35 so as to communicate with at least part of the first discharge hole 92 when the magnet key follower member 84 reaches the pushed-in position, it is possible to reliably discharge dirt, rainwater, etc.

Furthermore, since the casing 35 of the cylinder lock protective device 17 includes the body 38 provided so as to be connected to the cylinder body 16 of the cylinder lock 15 and the case 39 formed so as to cover the shutter plate 36 and be fixed to the body 38, and the case 39 is formed from the case main part 29, made of a resin, and the protector 30, made of a metal, having at least the flat plate portion 30a formed into a flat plate shape so as to cover the shutter plate 36, and being inserted and joined to the case main part 29, due to the case main part 29 being made of a resin the weight of the case 39 can be lightened, and due to the protector 30 made of a metal forming the case 39 together with the case main part 29 and being inserted and joined to the case main part 29, the theft resistance can be ensured.

Moreover, since the protector 30 is fixed to the body 38, fixing of the case 39 to the body 38 can be made strong.

Furthermore, since the case 39 is formed so as to have the plurality of side wall portions 39a, 39b, 39c, and 39d disposed so as to face mutually different directions, including at least two side wall portions 39a and 39b resiliently engaged with the body 38 and, in addition to the side wall portions 39a and 39b, one side wall portion 39c fastened to the body 38, it is possible to make assembly of the case 39 to the body 38 easy, thus enhancing the ease of assembly.

An embodiment of the present invention is explained above, but the present invention is not limited to the above embodiment and may be modified in a variety of ways as long as the modifications do not depart from the scope of the invention as defined by the claims.

## Claims

1. A protective device for a cylinder lock in which a shutter plate (36) is supported on a casing (35) having a mechanical key insertion hole (37) for a mechanical key (24) to be inserted into a cylinder lock (15), the shutter plate (36) being covered by a case (39) forming part of the casing (35) and being capable of moving between a closed position in which the shutter plate (36) closes the mechanical key insertion hole (37) and an open position in which the mechanical key insertion hole (37) is opened, wherein the casing (35) comprises a body (38) that is provided so as to be connected to a cylinder body (16) of the cylinder lock (15), and the case (39), which is formed so as to cover the shutter plate (36) and is fixed to the body (38), and the case (39) comprises a case main part (29), made of a resin, and a protector (30), made of a metal, that has at least a flat plate portion (30a) formed into a flat plate shape so as to cover the shutter plate (36) and that is inserted and joined to the case main part (29), and wherein the protector (30) comprises at least one latching piece (30b) that forms part of a side wall portion (39a) of the case (39).

2. The protective device for a cylinder lock according to Claim 1, wherein the protector (30) is fixed to the body (38).

3. The protective device for a cylinder lock according to Claim 1 or 2, wherein the case (39) is formed so as to comprise a plurality of side wall portions (39a, 39b, 39c, 39d) disposed so as to face mutually different directions, at least two side wall portions (39a, 39b) being resiliently engaged with the body (38), and other than these side wall portions (39a, 39b) one side wall portion (39c) being fastened to the body (38).

## Patentansprüche

1. Schutzvorrichtung für ein Zylinderschloss, in dem eine Verschlussplatte (36) an einem Gehäuse (35) gelagert ist, das ein Mechanischer-Schlüssel-Einsetzloch (37) für einen in ein Zylinderschloss (15) einzusetzenden mechanischen Schlüssel (24) aufweist, wobei die Verschlussplatte (36) von einer Hülle (39) bedeckt ist, die Teil des Gehäuses (35) bildet und bewegbar ist zwischen einer geschlossenen Position, in der die Verschlussplatte (36) das Mechanischer-Schlüssel-Einsetzloch (37) verschließt, und einer offenen Position, in der das Mechanischer-Schlüssel-Einsetzloch (37) geöffnet ist, wobei das Gehäuse (35) einen Körper (38) aufweist, der zur Verbindung mit einem Zylinderkörper (16) des Zylinderschlosses (15) vorgesehen ist, und die Hülle (39), die so ausgebildet ist, dass sie die Verschlussplatte (36) abdeckt und an dem Körper (38) fixiert ist, und die Hülle (39) ein aus Kunststoff hergestelltes Hüllenhauptteil (29) sowie einen aus Metall hergestellten Protektor (30) aufweist, der zumindest einen flachen Plattenabschnitt (30a) aufweist, der flach plattenförmig ausgebildet ist, um die Verschlussplatte (36) zu bedecken, und der in das Hüllenhauptteil (29) eingesetzt und damit verbunden ist, und wobei der Protektor (30) zumindest ein Sperrstück (30b) aufweist, das Teil eines Seitenwandabschnitts (39a) der Hülle (39) bildet.

2. Die Schutzvorrichtung für ein Zylinderschloss nach Anspruch 1, wobei der Protektor (30) an dem Körper (38) befestigt ist.

3. Die Schutzvorrichtung für ein Zylinderschloss nach Anspruch 1 oder 2, wobei die Hülle (39) so ausgebildet ist, dass sie eine Mehrzahl von Seitenwandabschnitten (39a, 39b, 39c, 39d) aufweist, die so angeordnet sind, dass sie in voneinander unterschiedlichen Richtungen weisen, wobei zumindest zwei Seitenwandabschnitte (39a, 39b) mit dem Körper (38) elastisch in Eingriff stehen, und ein anderer Seitenwandabschnitt (39c) als diese Seitenwandabschnitte (39a, 39b) an dem Körper (38) befestigt ist.

## Revendications

1. Dispositif de protection pour une serrure à barillet dans lequel une plaque d'obturation (36) est supportée sur un carter (35) ayant un trou d'insertion de clé mécanique (37) pour l'insertion d'une clé mécanique (24) dans une serrure à barillet (15), la plaque d'obturation (36) étant recouverte d'un boîtier (39) faisant partie du carter (35) et étant capable de se déplacer entre une position fermée dans laquelle la plaque d'obturation (36) ferme le trou d'insertion de clé mécanique (37) et une position ouverte dans laquelle le trou d'insertion de clé mécanique (37) est ouvert, dans lequel le carter (35) comprend un corps (38) qui est fourni de sorte à être relié à un corps de barillet (16) de la serrure à barillet (15), et le boîtier (39), qui est formé de façon à recouvrir la plaque d'obturation (36) et est fixé au corps (38), et le boîtier (39) comprend une partie principale de boîtier (29), faite d'une résine, et un élément de protection (30), fait d'un métal, qui a au moins une portion de plaque plane (30a) formée en une forme de plaque plane de façon à recouvrir la plaque d'obturation (36) et qui est inséré et joint à la partie principale de boîtier (29),
et dans lequel l'élément de protection (30) comprend au moins une pièce de verrouillage (30b) qui fait partie d'une portion de paroi latérale (39a) du boîtier (39).

2. Dispositif de protection pour une serrure à barillet selon la revendication 1, dans lequel l'élément de protection (30) est fixé au corps (38).

3. Dispositif de protection pour une serrure à barillet selon la revendication 1 ou 2, dans lequel le boîtier (39) est formé de façon à comprendre une pluralité de portions de paroi latérale (39a, 39b, 39c, 39d) disposées de façon à être orientées dans des directions mutuellement différentes, au moins deux portions de paroi latérale (39a, 39b) étant en prise de manière élastique avec le corps (38), et en dehors de ces portions de paroi latérale (39a, 39b) une portion de paroi latérale (39c) étant fixée au corps (38).
